# EUROPÄISCHE PATENTSCHRIFT

(11) **EP 1 278 359 B1**
(45) Veröffentlichungstag und Bekanntmachung des Hinweises auf die Patenterteilung: **28.03.2007**
(21) Anmeldenummer: 02014174.3
(22) Anmeldetag: 25.06.2002
(51) Int. Cl.: H04Q 7/22, H04M 15/00, H04L 12/14, H04Q 3/00

(54) **Verfahren zur Abrechnung von Kurznachrichten in einem Mobilfunknetz und Vorrichtung zur Durchführung des Verfahrens**
Method for billing short messages (SMS) in a mobile network and device for carrying out said method
Procédé pour la facturation de messages courts (SMS) dans un réseau mobile et dispositif pour la mise un oeuvre de ce procédé

(30) Priorität: 17.07.2001 DE 10134588
(43) Veröffentlichungstag der Anmeldung: 22.01.2003
(73) Patentinhaber: SIEMENS AKTIENGESELLSCHAFT, 80333 München (DE)
(72) Erfinder: Olah, Geza, 1145 Budapest (HU)

(56) Entgegenhaltungen:
- WO-A-00/41415
- WO-A-00/52650
- WO-A-01/37537
- WO-A-98/56202
- WO-A-99/21350
- US-A- 5 511 113
- KRUEGER F: "DAS INTELLIGENTE NETZ ERMOEGLICHT NEUE DIENSTE UND ANWENDUNGEN" NTZ (NACHRICHTENTECHNISCHE ZEITSCHRIFT), VDE VERLAG GMBH. BERLIN, DE, Bd. 45, Nr. 4, 1. April 1992 (1992-04-01), Seiten 254-256,258-261, XP000303522 ISSN: 0027-707X
- ETSI: "Universal Mobile Telecommunications System (UMTS);Service Requirement for the Open Services Access (OSA); Stage 1 (3GPP)" ETSI TS 122 127 VERSION 4.2.0 RELEASE 4, XP002219713 Gefunden im Internet: <URL:http://WEBAPP.ETSI.ORG/exchangefolder > [gefunden am 2002-11-06]

## Beschreibung

### Fachgebiet der Erfindung

Die Erfindung betrifft ein Verfahren zur Abrechnung von Kurznachrichten in einem Mobilfunknetz, beispielsweise in einem GSM-Netz, und eine Vorrichtung zur Durchführung des Verfahrens.

In digitalen Mobilfunk-Systemen hat sich neben der Sprachund Datenübertragung inzwischen auch der Kurznachrichten-Dienst, auch SMS für Short Message Service genannt, durchgesetzt. Mittels eines Endgerätes, in der Regel über die Tastatur des Mobiltelefons, kann eine Nachricht von beschränkter Länge (beispielsweise 160 Zeichen) eingegeben und dann über das Mobilfunknetz versendet werden.

Eine Beschreibung der Mechanismen zur technischen Realisierung des Kurznachrichten-Dienstes findet sich für das GSM-Netz in der Spezifikation GSM 03.40 (identisch mit ETSI TS 100 901): "Digital cellular telecommunications System, Technical realization of the Short Message Service".

Diese Spezifikationen beschäftigen sich allerdings nicht mit der Vergebührung dieser angebotenen Dienste, die Realisierung der Vergebührung wird in der Regel von den Netzbetreibern in proprietären Lösungen angeboten.

Die Verwendung von Kurznachrichten ist in den letzten Jahren sehr populär geworden. Inzwischen wird dieser Dienst auch zur Abfrage von Informationen verwendet, beispielsweise für Fahrplanauskünfte oder in Form eines Broadcast Dienstes bei Massenveranstaltungen wie Konzerten.

Derzeit werden Kurznachrichten einheitlich vergebührt, das bedeutet unabhängig von der Uhrzeit und davon, wo sich Sender und Empfänger (im Heimatnetz) befinden. Lediglich von dem im Netz verwendeten SMSC (Short Message Service Center) ist die Höhe der Gebühr abhängig. Ein im Netz erzeugte Gebührenticket enthält die Gebühreninformation, die Gebühr wird üblicherweise dem Absender der Kurznachricht in Rechnung gestellt.

### Stand der Technik

Für herkömmliche Verbindungen in einem Mobilfunknetz ist bereits der sogenannte "Premium Rate Service" bekannt, der es ermöglicht, dem Anrufer (Kunde) neben der Gebühr für die Verbindung ein zusätzliches Entgelt für die Dienstleistung zu berechnen. Hier werden aber die Informationen in der selben Verbindung übermittelt, die der Anrufer aufgebaut hat.

Ein Dienstleister, der seinem Kunden eine Information auf Abruf über SMS zukommen lassen will, hat derzeit jedoch kaum eine Möglichkeit, für diese Dienstleistung auch ein Entgelt zu erhalten. Eine Ausnahme bilden dabei höchstens Bankinstitute, die eine Benutzugsgebühr direkt vom Konto des dienstbenutzenden Kunden abbuchen können. Andere Methoden wie Überweisungen, sind in der Regel zu teuer und in Relation zu den zumeist eher geringen Beträgen auch zu kompliziert.

Aus der Druckschrift WO 98/56202 (Billing Mobile Terminated Short Messages) ist ein Verfahren bekannt, bei dem Kurznachrichten, die vom mobilen Endgerät empfangen werden (sogenannte "mobile terminated Short Messages"), beim Empfänger vergebührt werden. Dieses wird ermöglicht, indem ein Vorschlag für eine Charging-Information in der Kurznachricht mitgesendet wird. Weiterhin ist ein Short Message Service Center SMSC beschrieben, welches dafür geeignet ist, anhand der in der Kurznachricht enthaltenen Charging-Information eine Gebührenticket zu generieren.

Weitere ähnliche Verfahren und Systemen sind aus Dokumenten WO 00/41415 und WO 00/52650 bekannt.

Aufgabe der Erfindung ist es, eine flexiblere Vergebührung von Kurznachrichten zu ermöglichen. Weiterhin ist es Aufgabe der Erfindung, einem Dienstanbieter die Möglichkeit zu geben, für von ihm versendete Informationen eine angemessene Vergütung zu erhalten.

### Darstellung der Erfindung

Diese Aufgabe wird gelöst durch ein Verfahren gemäß der Ansprüche 1 bis 5 und durch eine Vorrichtung gemäß der Ansprüche 6 und 7.

Vorteilhafte Ausgestaltungen und Weiterbildungen sind in den Unteransprüchen angegeben.

Die wesentliche erfinderische Idee besteht darin, dass die Vergebührung der Informationen bereits mit der Vergebührung der Anforderungsnachricht für diese Information geschieht. Eine weitere wesentliche Idee der Erfindung ist es, dass die Anforderungsnachricht eine kombinierte Vergebührung enthält, nämlich erstens die Vergebührung der Versendung der Nachricht selbst, und zweitens die Vergebührung der angeforderten Information. Diese Art der Vergebührung der Information ist besonders vorteilhaft bei günstigen Diensten, wo es sich um Gebührenbeträge um ein bis Zehnfaches der normalen Gebühren handelt.

Eine vorteilhafte Ausführung der Erfindung sieht es vor, dass die Anforderungsnachricht in Form einer Kurznachricht (SMS, Short Message Service) gesendet wird. Weiterhin kann diese Anforderungsnachricht auch noch abhängig von der in ihr adressierten Zielrufnummer vergebührt werden. In einer weiteren Ausgestaltungsform existiert für diese Anforderungsnachricht eine vorgeschriebene Syntax. Diese Syntax kann in der leeren Nachricht bestehen, das heisst, es wird eine leere Kurznachricht an die Zielrufnummer gesendet. Durch dieses Vorgehen können syntaktische Fehler in der Anforderungsnachricht vermieden werden.

Handelt es sich bei den angeforderten Dienstleistungen um Informationen, so ist es vorteilhaft, diese Informationen ebenfalls in einer Kurznachricht an den Kunden zurückzusenden. Da eine Short Message - also Kurznachricht - auf 160 Zeichen begrenzt ist, sollte es dabei ohne Belang sein, in wie vielen einzelnen Kurznachrichten die Antwort an den Kunden zurückgesendet wird.

In einer weiteren Ausgestaltungsform ist es ebenfalls Kunden, die sogenannte Pre-Paid-Lösungen bevorzugen, möglich, solche Informationen anzufordern. Hierbei werden die anfallenden Gebühren von dem Guthabenkonto des Kunden abgebucht.

Weiterhin gehört zur erfindungsgemäßen Lösung einer Vermittlungseinrichtung, SSP (Service Switching Point) in einem sogenannten Intelligenten Netz (siehe dazu die Telekommunikationsnormen Q.1200 ff ITU). Diese Vermittlungsstelle ist in der Lage, eine Anforderungsnachricht zu erkennen und zu prüfen, ob es sich dabei um eine sogenannte Premium-Rate-Rufnummer handelt.

Ausserdem gehört zur erfindungsgemäßen Lösung ein Dienstekontrollzentrum (SCP, Service Control Point), das mit dem Service Switching Point (SSP) verbunden ist. Dieses Dienstekontrollzentrum wird von der Vermittlungsstelle informiert, wenn es sich um eine separat zu vergebührende Kurznachricht zur Anforderung von Informationen handelt. Am Dienstekontrollzentrum werden dann die entsprechenden Gebührentickets für diese Sondervergebührung erzeugt und versendet.

Vorstellbar ist ein Einsatz der Erfindung bei sogenannten Informationsdiensten, beispielsweise zur Abfrage von Börsennachrichten oder Fluginformationen. Hierbei sind viele Ausgestaltungsformen vorstellbar. Beispielsweise kann je nach Syntax der Abfragenachricht der Börsenkurs einer einzelnen Aktie, der Kurs des Aktienindex DAX oder auch eine Liste von Aktienkursen abgefragt werden.
Es ist weiterhin vorstellbar, dass eine angeforderte Information mit Zeitverzögerung gesendet wird. Hierbei ein Fluginformationsdienst zu nennen, bei dem eine geplante Abflugzeit beispielsweise 2 Stunden vor Abflug, mitgeteilt wird. In diesem Fall ist es auch möglich, dass überhaupt keine Antwortnachricht generiert wird. Daher ist eine weitere vorteilhafte Ausgestaltung der Erfindung, dass auf die Anforderungsnachricht zuerst mit einer Bestätigungsnachricht geantwortet wird, bevor die eigentlichen Informationen an den Kunden übertragen werden.

### Kurzbeschreibung der Zeichnungen

Im Folgenden wird die Erfindung anhand von Ausführungsbeispielen erläutert. Dabei zeigen
- Figur 1: den Aufbau eines herkömmlichen intelligenten Netzes nach Telekommunikationsnorm ITU Q.1200,
- Figur 2: den Ablauf einer Kommunikation zwischen einem Kunden und einem Service-Provider also Informationsanbieter,
- Figur 3: in einem Intelligenten Netz den Kommunikationsablauf, insbesondere das Schreiben von Gebührentickets,
- Figur 4: das Ermitteln von Tarifinformationen für das Versenden von Kurznachrichten nach Stand der Technik,
- Figur 5: das Ermitteln von Tarifinformationen für Kurznachrichten nach der Erfindung.

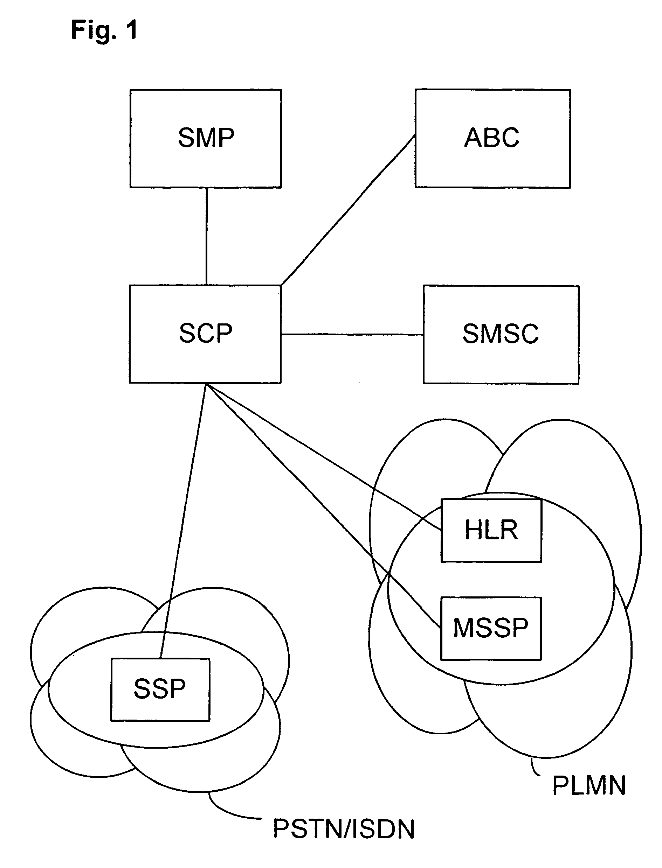

Figur 1 zeigt die Netzelemente, die für die Erfindung notwendig sind. Ein Netzzugang ist möglich über Festnetz (PSTN, Public Switch Telephone Network) oder Mobilfunknetz (PLMN, Public Land Mobile Network). Hierfür vorgesehen sind Vermittlungsstellen wie der SSP bzw. MSSP für das Mobilfunknetz. Im Mobilfunknetz ist weiterhin eine Teilnehmerdatenbank notwendig, HLR (Home Location Register).
Ein Dienstesteuerungspunkt (SCP, Service Control Point) ist für die Verwaltung der Netzknoten zuständig. Diese Dienststeuerungspunkte sind zentrale Steuerstellen des Netzes und beinhalten die Dienstelogik der Steuerungsebene, die für den Verbindungsprozess verantwortlich ist. Die wesentliche Aufgabe des SCP ist das Umsetzen der Rufnummer in eine echte Adresse und die Ausführung der Applikationen, das Entgegennehmen und Weiterleiten von Verbindungsinformationen zum Vermittlungsrechner, sowie Gebühren und Datenerfassung und Statistik.
Vom Teilnehmer gesendete Kurznachrichten werden zuerst im sogenannten Short Message Service Center (SMSC) abgelegt. Von dort aus werden sie dem adressierten Empfänger zugestellt. Die genaue Ausführung der Zustellung wird im Folgenden nicht weiter spezifiziert, das sie bereits aus den Normen zu entnehmen ist. Die Durchführung der Gebührenberechnung ist momentan in den Normen nicht festgelegt, sie erfolgt durch Herstellerproprietäre Lösungen.

Die Vergebührung erfolgt durch automatische Gebührenberechnung (Billing, via AMA: Automatic Message Counting Tickets). Nach Abbau der Verbindung wird ein Ticket erzeugt, der zum Verarbeitungszentrum, hier ABC (Administration and Billing Center)genannt,geschickt und dort gesammelt wird. Die Gebührenerfassung ist in der Regel die Sache des Netzbetreibers oder Dienstanbieters. Sie kann daher in verschiedenen Netzen auch verschiedenartig ausgestaltet sein. Bei der Versendung von Kurznachrichten geschieht die Vergebührung entfernungs unabhängig.
Der Service Management Point (SMP) übernimmt die Netzmanagementfunktionen. Er unterstützt verteilte Verarbeitungs- und Datenhaltungsfunktionen und wird über X.25 oder ein ähnliches Protokoll an die SCPs angeschlossen. Der Service Management Point ist zentral und netzweit für die Aktualisierung der Daten und der Software in den SCPs verantwortlich. So können hier neue IN Dienste oder Dienstmerkmale erstellt und als Programmsysteme in das bestehende Netz eingebracht werden.

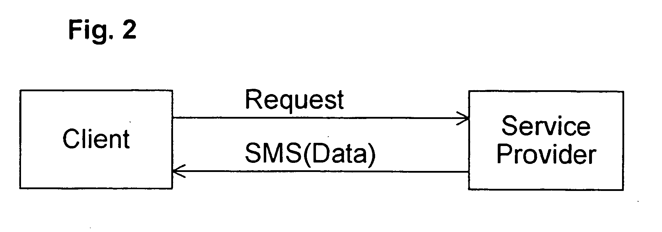

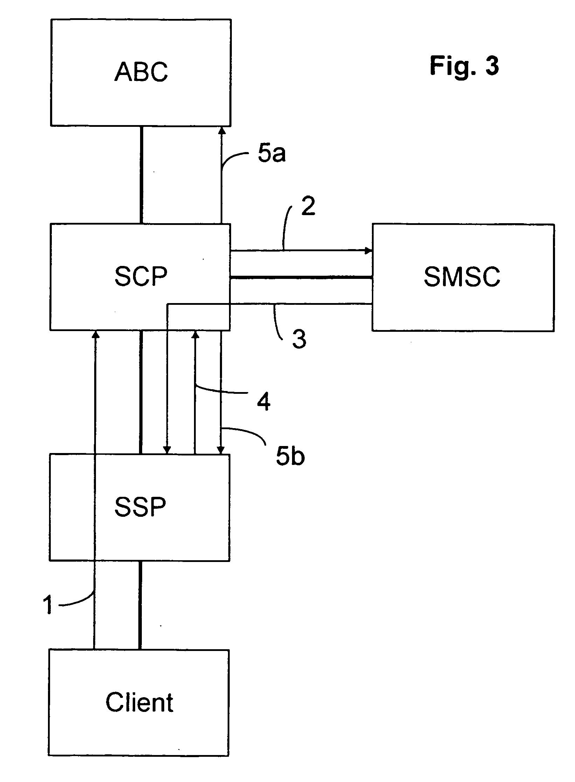

In Figur 2 ist nochmals dargestellt, wie die Kommunikation zwischen Kunden und Dienstanbieter ablaufen soll. Der Kunde (Client) schickt eine Informationsanforderungsnachricht (Request) an den Dienstanbieter (Service Provider). Der Service Provider antwortet dem Kunden hierauf mit der Antwort (SMS). Diese kann entweder eine Information sein oder auch eine Dienstleistung oder eine Ware. Vorstellbar ist zum Beispiel die Abfrage eines Börsenkurses, oder aktueller Informationen wie Kinoprogramm, Fernsehprogramm, Fahrplanauskunft etc. In Figur 3 wird nun dargestellt, wie die Vergebührung zur Informationsabfrage abläuft.

Figur 3 zeigt das Vorgehen der Vergebührung bei dem erfindungsgemäßen Premiumrate SMS-Dienst, insbesondere bei sogenannten Vertragskunden. Bisher hat ein NTS-Dienst (Number Translation service, wie Free Phone, Premiumrate, und Universal Access Number) zwei grundsätzliche Funktionen: Flexibles Routing und flexibles Charging. Die NTS-Dienste werden auch von mobilen Netzbetreibern angeboten, die derzeit jedoch kein Premiumrate SMS unterstützen. Erfindungsgemäß werden nun diese Funktionen auch für SMS ausgedehnt. Beschrieben wird die technische Realisierung der Vergebührung hierzu.

Die Vergebührung des A-Teilnehmers bei Premiumrate-Diensten erfolgt IN-gesteuert, durch SCI (Send Charging Information). Das Gutschreiben des Gebührenteils, den der Dienstteilnehmer vom Betreiber kriegt, erfolgt durch Schreiben von sogenannten IN-AMA-Tickets (siehe oben).

Bislang wurden die Gebühren der SMS-Meldungen einheitlich verrechnet, das heisst, nach erfolgreicher Ablage der SMS in einem SMSC wird die einheitliche Gebühr verrechnet. Bei der erfindungsgemäßen Lösung werden alle Kurznachrichten (SMS) weiterhin durch eine Vermittlungsstelle (die in diesem Fall ein FST sein muss) der zuständigen SMSC geschickt. (1,2). Hierbei ist die einfachste Lösung, die Standard SMS-Gebühr - wie bisher - nach erfolgter Ablage der Kurznachricht in einem SMSC einfach zu verrechnen (nicht unbedingt IN-gesteuert). Die Verrechnung des "Aufpreises" erfolgt dann mit Hilfe des IN-Systems. In diesem Fall wird der herkömmliche Mechanismus der Vergebührung der SMS am SSP/SMSC nicht ausgeschaltet.

Erhält der SSP die Information über die erfolgreiche Ablage der SMS, 3, so prüft er, ob es sich um eine Premium Rate-Rufnummer handelt. Ist dies der Fall, dann wird eine entsprechende INAP-Nachricht (Intelligent Network Application Part) zum Dienststeuerungsknoten (SCP) gesendet, 4. Damit wird die Premiumrate-Vergebührung am SCT initiiert. Der SCP erzeugt ein IN AMA-Ticket für das Gutschreiben der Teilgebühr dem Dienstteilnehmer (5a), sowie eine SCI (Send Charging Information) INAP-Message zum SSP zurückgeschickt (5b). Diese initiiert die zusätzliche Vergebührung des A-Teilnehmers.

Für den Prepaid-Dienst, das bedeutet, der Kunde hat ein Guthaben eingerichtet, sieht die Lösung etwas anders aus. Das Short Message Service Tarifmodell muss mit der zielabhängigen Vergebührung erweitert werden. Die angewählte Zieladresse (CdPA) ist dem Dienst zugänglich. Somit kann für das SMS-Tarifmodell dieselbe Administrationsmöglichkeit realisiert werden, wie es bereits für das MOC (Mobile Originating Call) Tarifmodell existiert. Das bedeutet, dass Zielrufnummerngruppen (Destination Zone) definiert werden können, wo die Zielrufnummern, die gleich vergebührt werden sollen, zusammengefasst werden können. Für das SMS-Tarifmodell muss nicht unbedingt eine eigene Liste der Zielrufnummerngruppen definiert werden, da die einzelnen Zielrufnummern meistens in dieselbe Vergebührungskategorie gehören, wenn es um Anrufe oder um Kurznachrichten geht, kann die für das Mobile Originating Call-Tarifmodell definierte Liste auch für Kurznachrichten verwendet werden. Für eine Zielrufnummer bei einem anderen Betreiber oder im Ausland wird es weitere Erfordernisse geben.

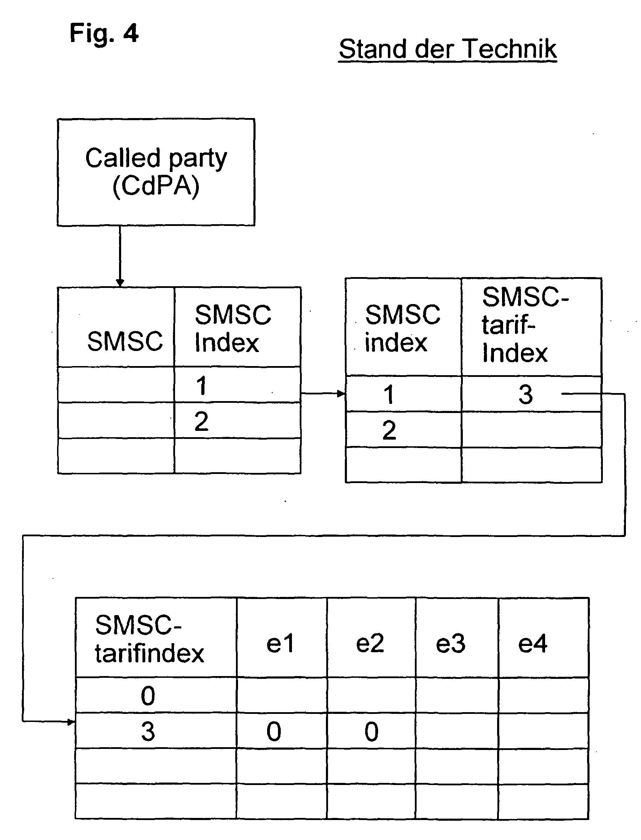

Figur 4 zeigt die Vergebührung, wie sie derzeit bei der Versendung von Kurznachrichten durchgeführt wird. Die Dienstelogik in der Vermittlungsstelle sucht die Adresse des Kurzmitteilungsnachrichtencenters (SMSC) in einer Liste von möglichen SMSCs. Diese Liste enthält einen SMSC-Index. Wird die gesuchte SMSC in der Liste nicht gefunden, so wird der Index auf Null gesetzt. Dieser SMSC-Index wird in einen SMSC-Tarifindex konvertiert. Daher ergibt sich, dass die Vergebührung einer Kurznachricht momentan bereits nah abhängig von der bereits genutzten SMSC unterschiedlich aussehen kann. Der SMSC-Tarifindex wiederum zeigt auf eine Länge von E-Parametern aus dieser Tabelle kann man dann die tatsächlichen Tarifinformationen entnehmen.

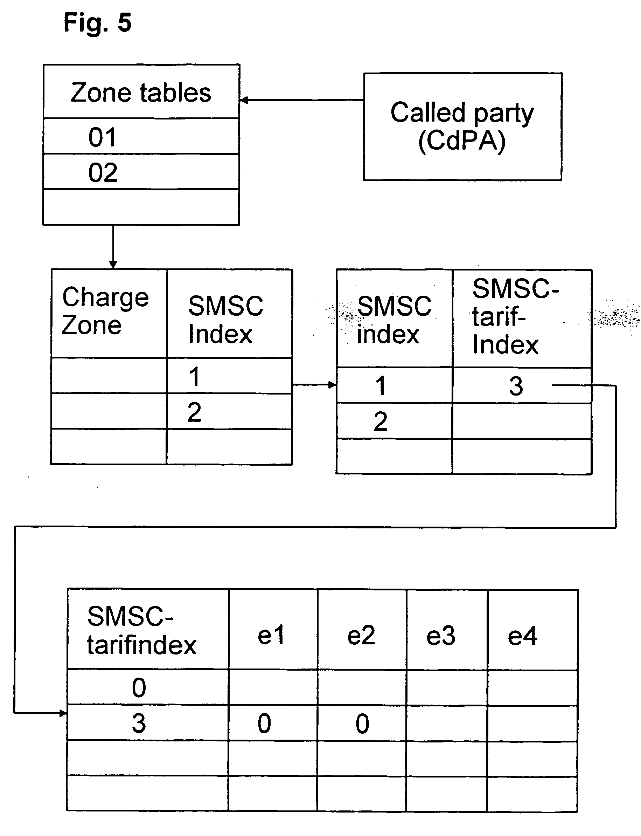

Figur 5 zeigt nun, wie ausgehend von Figur 4 eine Vergebührung durchgeführt wird für Kurznachrichten, abhängig von der Zielrufnummer. Hierbei wird ausgegangen von einem Tarifmodell, das ähnlich ist dem Mobile Originating Call Tarifmodell, dem ein E-Parameterset abhängig ist von der Destination Zone und einem "Timewindow", also zeitabhängig. Wenn eine zielrufnummernabhängige Vergebührung von Kurznachrichten möglich ist, dann können Premiumrate-Rufnummern von einer bestimmten Gebühr in einer Gruppe zusammengefasst werden, und dieser Zielrufnummerngruppe kann dann ein E-Parameterset, der eine höhere Gebühr darstellt, zugeordnet werden.

Die Gebühren sind natürlich konfigurierbar. Die Tarif Mapping Table (auf Providerlevel) muss mit allen relevanten Premiumrate-SMS-Tarifen ergänzt werden. Laut dieser Tarif IDs wird dann der Tarif der einzelnen Premiumrate-SMS-Rufnummer (auf Subscriber-Level) definiert. Beim Definieren der Charging-Matrix für den Kunden (Subscriber) können derzeit die Tarife der einzelnen Callsegmente angegeben werden. Der SMS kann hier als ein neuer Callsegment definiert werden. Am einfachsten ist es, einen der bisher nicht benutzten Callsegmente für die SMS-Meldungen zu verwenden.

### Abkürzungsverzeichnis

- ABC: Administration, Billing Customer Care
- CSI: Send Charging Information
- HLR: Home Location Register
- INAP: Intelligent Network Application Protocol/Part
- ISDN: Integrated Services Digital Network
- MSSP: Mobile Service Switching Point
- PLMN: Public Land Mobile Network
- PSTN: Public Switched Telephone Network
- SCP: Service Control Point
- SMSC: Short Message Service Center
- SSP: Service Switching Point

- SMP: Service Management Point
- SMS: Short Message Service

## Patentansprüche

1. Verfahren zur Abrechnung von Kosten für die Versendung von Informationen, Dienstleistungen oder Waren an einen Kunden (Client) über ein Mobilfunknetz,
bei dem der Kunde zu einem Anbieter (Service Provider) eine Kurznachricht (SMS) schickt um die vom Anbieter die gewünschten Informationen, Dienstleistungen oder Waren zu erhalten,
bei dem sich die Gebühren für die Kurznachricht zusammensetzen aus mindestens der Gebühr für die Versendung der Kurznachricht (5a) und den Kosten für die Information, Dienstleistungen oder Waren dem Kunden (5b), bei dem die Berechnung der Gebühren für diese Kurznachricht die Kosten für die angeforderten Informationen, Dienstleistungen oder Waren enthält und abhängig von der adressierten Zielrufnummer erfolgt,
**dadurch gekennzeichnet, dass**
die adressierten Zielrufnummern in Zielrufnummerngruppen zusammengefasst sind, und die Vergebührung einzelner Zielrufnummern einer Zielrufnummerngruppe in der gleichen Höhe erfolgt.

2. Verfahren nach Patentanspruch 1,
**dadurch gekennzeichnet, dass**
die Kurznachricht als Callsegment in der Charging-Matrix abgebildet ist.

3. Verfahren nach Patentanspruch 1 oder 2,
**dadurch gekennzeichnet, dass**
die angewählte Zieladresse (CdPA) dem Dienst zugänglich ist und
die dem Kunden berechneten Kosten von einem Guthabenkonto (Prepaid-Konto) abgezogen werden.

4. Verfahren nach einem der Patentansprüche 1 bis 3
**dadurch gekennzeichnet, dass**
der Kunde (Client) Informationen (Request) anfordert, und der Kunde die Antwort in Form einer Kurznachricht (SMS) erhält, die die vom Kunden angeforderten Informationen enthält.

5. Verfahren nach einem der Patentansprüche 1 bis 4
**dadurch gekennzeichnet, dass**
die Kurznachricht gemäß einer vorgegebenen Syntax aufgebaut sein muss, wobei diese Syntax die leere Nachricht beinhalten kann.

6. Vorrichtung (SSP) zur Durchführung des Verfahrens nach einem der Patentansprüche 1 bis 5,
mit Mitteln zum Empfangen einer Kurznachricht (SMS),
mit Mitteln zum Überprüfen der Kurznachricht(SMS), anhand der Zielrufnummer (CdPA), ob es sich um eine speziell zu vergebührende Informationsanforderung handelt, und Mitteln zum Senden einer Vergebührungsnachricht (INAP Message) an ein Dienstezentrum im Netz (SCP) zur Durchführung einer gemeinsamen Abrechnung der Gebühr für die angeforderte Information und der Gebühr für die Versendung der Informationsanforderung.

7. Vorrichtung (SCP) zur Durchführung des Verfahrens nach einem der Patentansprüche 1 bis 5,
mit Mitteln zum Empfangen einer Vergebührungsnachricht (INAP Message) und
mit Mitteln zum Absenden einer ersten Gebührennachricht (5a, AMA-Ticket) zur Abrechnung der Gebühr für die angeforderte Information und
mit Mitteln zum Absenden einer zweiten Gebührennachricht (5b, SCI) zur Vergebührung der Versendung der Informationsanforderung.

## Claims

1. Method for billing costs for sending out information, services or goods to a client via a mobile radio network, in which the client sends a short message (SMS) to a service provider in order to obtain the required information, services or goods from the provider, in which the charges for the short message are composed of at least the charge for sending out the short message (5a) and the costs for the information, services or goods to the client (5b), in which the debiting of the charges for this short message contains the costs for the requested information, services or goods, and is effected in dependence on the destination number addressed, **characterized in that** the destination numbers addressed are combined in destination zones and individual destination numbers of a destination zone are billed at the same level.

2. Method according to claim 1, **characterized in that** the short message is mapped as a call segment in the charging matrix.

3. Method according to one of claims 1 and 2, **characterized in that** the dialled destination address (CdPA) is accessible to the service and the costs debited to the client are subtracted from a credit account (pre-paid account).

4. Method according to one of claims 1 to 3, **characterized in that** the client requests information and the client receives the answer in the form of a short message (SMS) which contains the information requested by the client.

5. Method according to one of claims 1 to 4, **characterized in that** the short message must be structured in accordance with a predetermined syntax, where this syntax can contain the blank message.

6. Device (SSP) for carrying out the message according to one of claims 1 to 5,
comprising means for receiving a short message (SMS),
comprising means for checking the short message (SMS), by means of the destination number (CdPA), whether this is an information request which is to be billed specially, and
means for sending a billing message (INAP message) to a service center in the network (SCP) for carrying out joint billing for the charge for the requested information and the charge for sending out the information request.

7. Device (SCP) for carrying out the method according to one of claims 1 to 5,
comprising means for receiving a billing message (INAP message) and
comprising means for sending a first charge message (5a, AMA ticket) for billing for the charge for the requested information and
comprising means for sending a second charge message (5b, SCI) for billing for the sending-out of the information request.

## Revendications

1. Procédé pour la facturation de coûts pour l'émission d'informations, de services ou de marchandises à un client (Client) par l'intermédiaire d'un réseau de radiocommunication mobile,
dans lequel le client envoie un message court (SMS) à un fournisseur (Service Provider) afin d'obtenir du fournisseur les informations, les services ou les marchandises souhaités,
dans lequel les taxes pour le message court se composent d'au moins la taxe pour l'émission du message court (5a) et des coûts pour les informations, les services ou les marchandises fournis au client (5b),
dans lequel la facturation des taxes pour ce message court comprend les coûts pour les informations, les services ou les marchandises demandés et est réalisée en fonction du numéro d'appel de destination,
**caractérisé en ce que**
les numéros d'appel de destination adressés sont regroupés en groupes de numéros d'appel de destination et **en ce que** la taxation de numéros d'appel de destination individuels d'un groupe de numéros d'appel de destination est réalisée du même montant.

2. Procédé selon la revendication 1,
**caractérisé en ce que**
le message court est représenté comme segment d'appel « call segment » dans la matrice de taxation.

3. Procédé selon la revendication 1 ou 2,
**caractérisé en ce que**
l'adresse de destination sélectionnée (CdPA) est accessible au service et
**en ce que** les coûts facturés pour le client sont débités d'un compte d'avoir (compte prépayé).

4. Procédé selon l'une quelconque des revendications 1 à 3,
**caractérisé en ce que**
le client (Client) demande des informations (Request) et
**en ce que** le client obtient la réponse sous forme d'un message court (SMS) qui comprend les informations demandées par le client.

5. Procédé selon l'une quelconque des revendications 1 à 4,
**caractérisé en ce que**
le message court doit être structuré selon une syntaxe prédéfinie, cette syntaxe pouvant contenir le message vierge.

6. Dispositif (SSP) pour la réalisation du procédé selon l'une quelconque des revendications 1 à 5,
comprenant des moyens pour recevoir un message court (SMS), comprenant des moyens pour vérifier le message court (SMS) à l'aide du numéro d'appel de destination (CdPA), afin de constater s'il s'agit d'une demande d'information à taxer de manière particulière, et
comprenant des moyens pour émettre un message de taxation (INAP Message) à un centre de services dans le réseau (SCP) pour la réalisation d'une facturation commune de la taxe pour l'information demandée et de la taxe pour l'émission de la demande d'information.

7. Dispositif (SCP) pour la réalisation du procédé selon l'une quelconque des revendications 1 à 5,
comprenant des moyens pour recevoir un message de taxation (INAP Message) et
comprenant des moyens pour émettre un premier message de taxation (5a, ticket AMA) pour la facturation de la taxe pour l'information demandée et
comprenant des moyens pour envoyer un deuxième message de taxation (5b, SCI) pour la taxation de l'envoi de la demande d'information.
